# FASCICULE DE BREVET EUROPEEN

(11) **EP 3 271 786 B1**
(45) Date de publication et mention de la délivrance du brevet: **31.05.2023**
(21) Numéro de dépôt: 16711581.5
(22) Date de dépôt: 17.03.2016
(51) Int. Cl.: B63C 3/06, G05D 1/00

(54) **EQUIPEMENT D'ASSISTANCE A UNE EXPLORATION SOUS-MARINE ET ROBOT SOUS-MARIN POUR L'EQUIPEMENT**
AUSRÜSTUNG ZUR UNTERSTÜTZUNG EINER UNTERWASSEREXPLORATION UND UNTERWASSERROBOTER FÜR DIE AUSRÜSTUNG
EQUIPMENT FOR ASSISTING UNDERWATER EXPLORATION AND UNDERWATER ROBOT FOR THE EQUIPMENT

(30) Priorité: 17.03.2015 CH 3652015
(43) Date de publication de la demande: 24.01.2018
(73) Titulaire: Hublot S.A., Genève, 1204 Genève (CH)
(72) Inventeur: BUTTET, Mathias, 1125 Monnaz (CH); BLUMENTHAL, Jean-Michel, 1290 Chavannes-des-bois (CH)
(74) Mandataire: Moinas & Savoye SARL
(86) Numéro de dépôt international: PCT/EP2016/055899
(87) Numéro de publication internationale: WO 2016/146797

(56) Documents cités:
- DE-A1-102010 051 491
- FR-A1- 2 967 767
- US-A1- 2013 314 303
- Hiroshi Yoshida: "29 Fundamentals of Underwater Vehicle Hardware and Their Applications", , 31 décembre 2008 (2008-12-31), XP055276620, Extrait de l'Internet: URL:http://www.intechopen.com/source/pdfs/ 6231/InTech-Fundamentals_of_underwater_veh icle_hardware_and_their_applications.pdf [extrait le 2016-05-31]
- TEIXEIRA JOAO MARCELO ET AL: "Teleoperation Using Google Glass and AR, Drone for Structural Inspection", 2014 XVI SYMPOSIUM ON VIRTUAL AND AUGMENTED REALITY, IEEE, 12 mai 2014 (2014-05-12), pages 28-36, XP032653509, DOI: 10.1109/SVR.2014.42 [extrait le 2014-09-29]

## Description

La présente invention concerne un équipement d'assistance à une exploration sous-marine et un robot d'exploration sous-marine pour ledit équipement.

Dans le domaine de l'archéologie sous-marine, des plongeurs-archéologues ont pour mission d'explorer des fonds sous-marins, notamment des épaves. Ces missions d'archéologie sous-marine s'effectuent généralement dans des conditions difficiles, du fait notamment des contraintes liées à la durée limitée des plongées, à l'environnement sous-marin et à la présence de sédiments au fond des mers.

Pour assister ou même remplacer un plongeur, des robots archéologues ont été développés. Un robot dénommé « Speedy » a notamment été développé par le CNRS. Ce robot est équipé d'une main à trois doigts permettant de manipuler des objets fragiles sans les casser. La main du robot est pilotée depuis un poste de commandement situé hors de l'eau, qui affiche des images de la main prises par des caméras embarquées. En visualisant ces images, un pilote peut commander à distance les actions de la main à l'aide d'une manette. Par exemple, le document de Hiroshi Yoshida « 29 fundamentals of Underwater Vehicle Hardware and Their Applications » décrit un robot sous-marin équipé d'une caméra performante, dont l'image est transmise à une station distante par un moyen de communication pour visualiser une image.Le robot peut être commandé à distance et comprend des bras pour attraper des échantillons.

La présente invention propose d'améliorer encore la situation.

L'invention est définie par les revendications.

A cet effet, l'invention concerne un équipement d'assistance à une exploration sous-marine, comprenant un robot sous-marin et un dispositif de pilotage à distance du robot, aptes à communiquer l'un avec l'autre, dans lequel
- le robot comprend des moyens de déplacement sous-marin et un dispositif de capture d'images ;
- le dispositif de pilotage comprend des lunettes de vision 3D adaptées pour qu'un utilisateur portant les lunettes visualise l'environnement sous-marin du robot en trois dimensions à partir des images capturées par le robot et des moyens de guidage en déplacement à distance du robot à partir de l'environnement sous-marin en trois dimensions visualisé.

Grâce à l'invention, les images capturées par le robot, ou drone, *in situ* (c'est-à-dire sur le site d'exploration sous-marine) permettent de créer et d'afficher ou de visualiser un environnement sous-marin virtuel en trois dimensions, représentatif de l'environnement sous-marin réel en trois dimensions du robot. Le dispositif de pilotage permet de guider le robot dans son environnement réel par un guidage dans cet environnement virtuel en trois dimensions, autrement dit à partir de l'environnement en trois dimensions visualisé. Les déplacements du robot sont ainsi efficacement contrôlés à distance.

Avantageusement, les lunettes sont adaptées pour guider le robot par des mouvements de tête de l'utilisateur portant les lunettes. Le guidage du robot s'effectue ainsi par un mouvement d'une partie du corps, en l'espèce la tête, en fonction de la perception que l'utilisateur portant les lunettes de vision 3D a de l'environnement 3D créé.

Dans un premier mode de réalisation, les lunettes sont destinées à être portées par un utilisateur situé hors de l'eau.

Dans un deuxième mode de réalisation, les lunettes sont intégrées dans un masque de plongée et destinées à être portées par un utilisateur plongeur situé dans l'eau.

Selon un exemple particulier de réalisation, le robot comporte une buse de propulsion d'un jet d'eau sous pression destiné à nettoyer une zone.

Grâce à cela, le robot peut effectuer des travaux de déblaiement à la place d'un plongeur-archéologue.

Avantageusement, le robot comporte un tube d'aspiration de dépôts, notamment de sédiments, dégagés par le jet d'eau.

Avantageusement encore, le tube d'aspiration est disposé de façon concentrique autour de la buse propulsion.

Le robot peut comporter un tube d'évacuation des dépôts aspirés, ayant par exemple une longueur d'au moins 5m, notamment une longueur comprise entre 5 et 10m.

Avantageusement, le robot comporte un tube d'évacuation des dépôts aspirés.

Dans un mode de réalisation particulier, le tube d'évacuation a une longueur d'au moins 5 m, notamment une longueur comprise entre 5 et 10m.

Avantageusement, le tube d'évacuation est pourvu d'au moins un filtre destiné à récupérer des fragments d'objet.

Avantageusement encore, le robot est pourvu d'au moins une antenne réglable dotée d'un dispositif d'éclairage.

Le robot peut comprendre un boîtier présentant une face avant et une face arrière et un flanc annulaire. Le flanc annulaire peut porter une pluralité de moteurs, par exemple quatre moteurs, d'entraînement en rotation de pales, par exemple des pales orientables. Ces pales peuvent être des pales verticales (s'étendant en longueur selon la direction de l'axe moteur). Les moteurs peuvent être disposés de façon symétrique et décalés angulairement l'un de l'autre de 90°.

Le robot peut aussi comporter un couvercle étanche et amovible, permettant d'accéder facilement aux éléments contenus dans le boîtier.

Dans un mode de réalisation particulier, le robot est équipé d'un écran destiné à visualiser des images provenant du dispositif de pilotage et/ou des images capturées par le dispositif de capture d'images du robot.

Avantageusement, le robot est doté d'une glace montée de façon étanche sur l'une des faces du boîtier et derrière laquelle l'écran est disposé.

L'invention concerne aussi un robot pour un équipement d'assistance à une exploration sous-marine sous-marin comprenant
- des moyens de déplacement sous-marin,
- un dispositif de capture d'images destiné à capturer des images adaptées pour créer un environnement sous-marin en trois dimensions à visualiser ;
- un dispositif de communication destiné à transmettre à un dispositif de pilotage à distance lesdites images capturées et à recevoir des commandes de guidage en déplacement dans l'environnement sous-marin en trois dimensions créé.

Le robot peut comprendre tout ou partie des caractéristiques additionnelles suivantes :
- le robot comporte une buse de propulsion d'un jet d'eau sous pression destiné à dégager des dépôts, notamment de sédiments, d'une zone à nettoyer ;
- le tube d'aspiration est disposé de façon concentrique autour de la buse propulsion le robot comporte un tube d'évacuation de dépôts aspirés le tube d'évacuation a une longueur d'au moins 5 m, notamment une longueur comprise entre 5 et 10m ;
- le tube d'évacuation est pourvu d'au moins un filtre adapté pour récupérer des fragments d'objet ;
- le robot est pourvu d'au moins une antenne réglable dotée d'un dispositif d'éclairage il comprend un boîtier présentant une face avant, une face arrière et un flanc annulaire ;
- le flanc porte une pluralité de moteurs, par exemple quatre moteurs, d'entraînement en rotation de pales, par exemple des pales orientables ;
- les quatre moteurs sont disposés de façon symétrique et décalés angulairement l'un de l'autre de 90° ;
- le robot comporte un couvercle étanche et amovible ;
- le robot est équipé d'un écran destiné à afficher des images provenant du dispositif de pilotage et/ou des images capturées par le dispositif de capture d'images ;
- le robot est doté d'une glace montée de façon étanche sur l'une des faces du boîtier et derrière laquelle l'écran est disposé.

L'invention sera mieux comprise à l'aide de la description suivante d'une forme de réalisation particulière de l'équipement d'assistance à une exploration sous-marine selon l'invention, en référence aux dessins annexés sur lesquels
- La figure 1 représente de façon schématique l'équipement d'assistance à une exploration sous-marine, selon une forme de réalisation particulière de l'invention ;
- La figure 2 représente de façon schématique un robot sous-marin de l'équipement de la figure 1 ;
- La figure 3A représente une vue de face d'un robot d'exploration sous-marine de l'équipement de la figure 1 ;
- La figure 3B représente une vue arrière du robot de la figure 2 ;
- La figure 4 représente une vue en trois dimensions, côté face avant, du robot ;
- Les figures 5A à 5D représentent un système de positionnement d'un robot central, selon une forme de réalisation particulière ;
- La figure 6 représente un robot de travail, en vue de coupe, intégrant une pompe d'aspiration d'eau de giclage, selon un exemple de réalisation particulier ;
- La figure 7 représente un robot central, relié à un robot de travail et à un sac de collecte, sur un site de fouille, en vue de coupe ;
- La figure 8 représente un robot de travail intégrant deux réservoirs d'air comprimé, selon un exemple de réalisation ;
- La figure 9 représente une exemple d'intégration d'un appareil de voltampérométrie dans un robot de travail 1 ;
- La figure 10 représente un exemple de réalisation d'un appareil de mesure de turbidité équipant un robot de travail ;
- La figure 11 représente une paire de ballasts équipant un robot de travail selon un exemple de réalisation ;
- La figure 12 représente différentes vues d'un système de support de deux caméras équipant un robot de travail selon un exemple de réalisation.

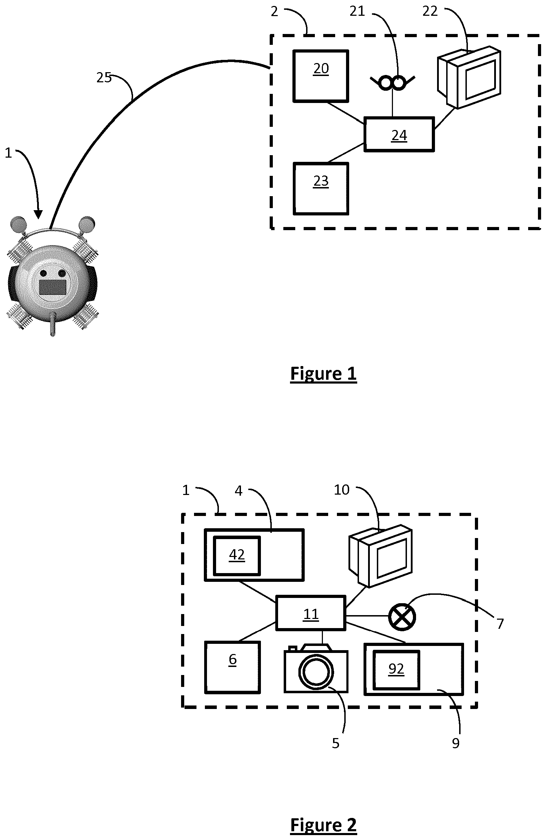

Sur la figure 1, on a représenté de façon schématique un équipement d'assistance à une exploration sous-marine, selon un exemple particulier de réalisation de l'invention. L'équipement comprend un robot sous-marin 1, également appelé « robot de travail ou de fouille », et un dispositif 2 de pilotage à distance du robot 1. Le robot 1 et le dispositif de pilotage 2 sont aptes à communiquer l'un avec l'autre. Dans l'exemple décrit ici, ils communiquent par liaison filaire, au moyen d'un câble de communication informatique.

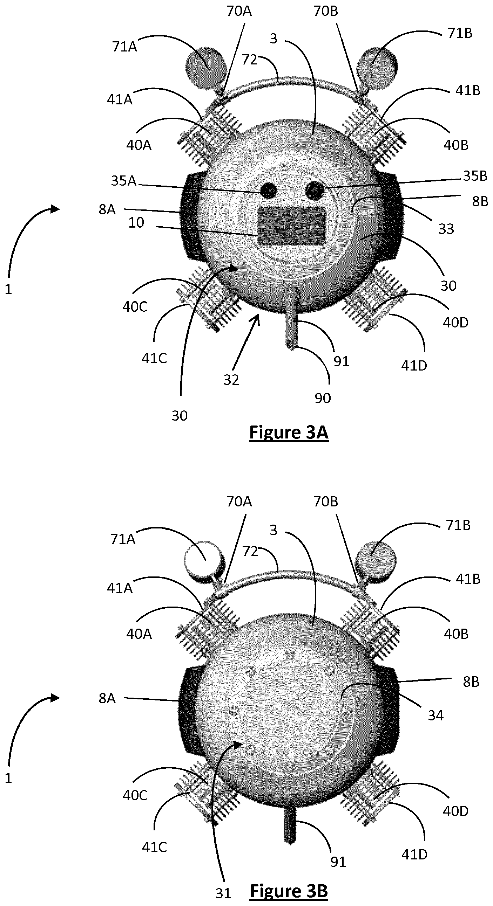

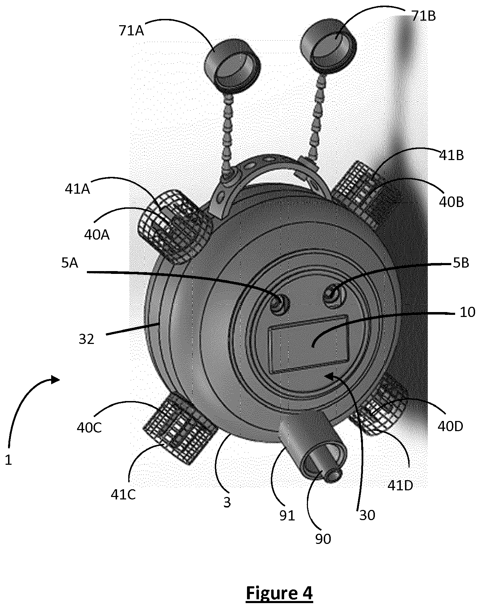

Les différents éléments du robot sont représentés de façon schématique sur la figure 2. Les figures 3A et 3B représentent respectivement une vue avant et une vue arrière du robot 1, selon un premier exemple de réalisation. La figure 4 représente une vue en perspective du robot 1, selon un deuxième exemple de réalisation, différant de celui des figures 3A et 3B essentiellement par des caractéristiques esthétiques. Les éléments identiques ou correspondants représentés sur les différentes figures portent les mêmes références.

Le robot sous-marin 1, ou drone sous-marin, comprend un boîtier 3, des moyens de déplacement sous-marin 4, un dispositif de capture d'images 5, un module de communication 6, et une unité centrale de commande 11.

Dans la forme de réalisation particulière décrite ici, le boîtier 3 comprend deux faces avant 30 et arrière 31 reliées par un flanc 32. La face avant 30 comprend ici une glace (non représentée sur la figure 2) en matériau transparent et de forme circulaire, montée de façon étanche dans un logement 33 ménagé dans le boîtier 3. Le logement 33 est formé par un rebord annulaire du boîtier 3, en retrait par rapport au plan de la face avant 30. La face arrière 31 comprend un couvercle 34 amovible et étanche. Ce couvercle 34 est ici de forme circulaire (par exemple de même forme que celle de la glace 30). Il est monté de façon étanche dans un logement analogue au logement 33, ménagé dans la face arrière du boîtier 3. Il est fixé de façon amovible par vissage, à l'aide d'une pluralité de vis disposées sur le pourtour du couvercle 34. Les vis sont réparties régulièrement. Dans l'exemple de réalisation tel que représenté sur la figure 3, le couvercle 34 est fixé au moyen de huit vis décalées angulairement l'une de l'autre d'un angle de 45°. Le couvercle 34 peut être retiré, lorsque le robot est situé hors de l'eau, afin d'accéder aux éléments contenus à l'intérieur du boîtier 3. Le flanc 32 comprend une partie annulaire cylindrique reliée aux deux faces avant 30 et arrière 31 par des parties annulaires, bombées vers l'extérieur, de sorte à relier la partie annulaire cylindrique du flanc 32 aux faces avant 30 et arrière 31.

Les moyens de déplacement 4 du robot 1 comprennent au moins un moteur d'entraînement, destiné à entraîner en rotation des pales. Les pales sont ici « verticales ». En d'autres termes, elles forment un ensemble du type Voith Schneider. Les pales présentent une surface portante (par exemple de forme globalement rectangulaire) destinée à être entraînée en rotation autour d'un axe moteur, qui s'étend en longueur le long de l'axe moteur. Les pales rotatives sont ici orientables angulairement. Grâce à cela, elles peuvent jouer un rôle de gouvernail pour diriger le robot en déplacement. Le nombre de pales par moteur peut être compris entre 4 et 6. Dans l'exemple décrit ici, le robot 1 comprend quatre moteurs à pales verticales orientables 40A à 40D disposés autour de la partie annulaire cylindrique du flanc 32. Les quatre moteurs 40A à 40D sont répartis régulièrement autour du boîtier 3. Ils sont décalés angulairement l'un de l'autre d'un angle de 90°. Chaque moteur 40A-40D est ici entouré d'une grille 41A-41D de protection des pales, par exemple de forme cylindrique. En outre, les moyens de déplacement 4 comprennent un module de commande 42 destiné à commander le fonctionnement des moteurs 40A à 40D et de leurs pales. Le module de commande 42 est destiné à recevoir des commandes de guidage provenant du dispositif de pilotage distant 2, comme cela sera explicité plus loin. On pourrait toutefois utiliser des moteurs de tout type, notamment tout type de moteurs à hélices.

Le dispositif de capture d'images 5 comprend ici deux caméras 3D, référencées 5A et 5B, disposées à l'intérieur du boîtier 3, au droit d'ouvertures traversantes 35A, 35B ménagées dans le fond du logement 33 de la face avant 30. Il est destiné à capturer des images adaptées pour créer un environnement sous-marin en trois dimensions à visualiser.

Le module de communication 6 du robot 1 (non représenté) est adapté pour communiquer avec le dispositif de pilotage 2, ici par liaison filaire, par un câble de communication informatique 26. Il est intégré dans le boîtier 3.

Dans l'exemple de réalisation décrit ici, le robot 1 comprend également un écran d'affichage 10. Celui-ci est disposé côté face avant 30, dans le logement 33, derrière la glace, ici au-dessous des deux ouvertures 35A, 35B. Il est destiné à afficher des images prises par les caméras 5A, 5B et/ou des images provenant du dispositif de pilotage 2, comme cela sera explicité plus loin.

Dans une variante de réalisation, l'écran 10 est tactile. Dans ce cas, l'écran 10 est collé contre la face interne de la glace de la face avant 30 du robot 1 de sorte à ce que la glace recouvre l'écran 10. La glace est en un matériau adapté pour permettre une utilisation de l'écran tactile 10.

L'écran 10 peut être utilisé pour communiquer avec un plongeur accompagnant le robot 1. Par exemple, un utilisateur du dispositif de pilotage 2 pourrait communiquer avec le plongeur par l'intermédiaire de l'écran 10.

Le robot 1 peut être équipé de moyens d'éclairage 7 qui comprennent ici deux antennes réglables 70A, 70B dotées chacune d'un dispositif d'éclairage 71A, 71B, tel qu'un projecteur lumineux, destiné à éclairer les fonds marins. Les antennes 70A, 70B sont réglables dans le sens où leur forme et/ou leur position peuvent être réglées, ici manuellement. Par exemple, les antennes 70A, 70B peuvent être réalisées en un matériau ou une structure à mémoire de forme. Elles permettent d'orienter à la main les projecteurs. Les deux ensembles antenne-projecteur sont montés sur une barre 72, en forme d'arc de cercle. La barre 72 est fixée par exemple aux grilles de protection supérieures 41A et 41B.

Le robot 1 est ici également pourvu d'éléments de lest, en l'espèce deux éléments 8A, 8B (non représentés sur la figure 4). Ceux-ci sont portés par le flanc 32, par exemple par la partie annulaire cylindrique du flanc 32. Il sont par exemple disposés entre les moteurs supérieurs 40A, 40B et les moteurs inférieurs 40C, 40D.

Le robot 1 est ici équipé d'un outil de déblayage 9. Cet outil de déblayage 9 comporte une buse 90 de propulsion d'un jet d'eau sous pression destiné à dégager des dépôts, notamment de sédiments, d'une zone à nettoyer. La buse 90 comprend un tube ayant par exemple une longueur d'environ 30cm. Elle est reliée à une pompe (non représentée) située à l'intérieur du boîtier 3 et destinée à produire un jet d'eau à une pression ici supérieure à 2 bars. La pompe est alimentée en eau par une entrée d'aspiration d'eau, adaptée pour aspirer de l'eau lorsque le robot 1 est immergé dans l'eau. L'entrée est munie d'un filtre destiné à empêcher l'aspiration de détritus ou autres éléments de matière.

Dans l'exemple de réalisation décrit ici, l'outil de déblayage 9 comprend également un tube d'aspiration 91 destiné à aspirer les dépôts, notamment les sédiments, dégagés par le jet d'eau. Le tube d'aspiration 91 est relié à une pompe (non représentée) située à l'intérieur du boîtier 3. Le tube 91 est disposé de façon concentrique autour de la buse 90 de propulsion du jet d'eau. Il est relié à un autre tube d'évacuation (non représenté), ou tube prolongateur, destiné à rejeter l'eau et les éléments de matière aspirés (sédiments notamment) plus loin. Le tube d'évacuation est de préférence un tube flexible, en matériau souple, qui s'étend par exemple derrière le robot sur une longueur comprise entre 5 et 10 m. Il fait par exemple saillie de la face arrière 31 du robot, dans le bas de celle-ci, au droit ou sensiblement au droit du tube d'aspiration 91. L'extrémité du tube d'évacuation peut être équipée d'un filtre destiné à récupérer de petits objets ou fragments d'objet destinés être triés par des archéologues hors de l'eau. Le tube d'évacuation est toutefois facultatif. L'évacuation pourrait se faire par une ouverture, par exemple à l'arrière du boîtier, sans tube prolongateur.

Le tube d'évacuation peut être relié à un sac de récolte des éléments aspirés (sédiments, petits objets ou fragments d'objet, ou autres éléments). Le sac de récolte est de préférence perméable à l'eau. Il est avantageusement réalisé en textile tissé ayant une fonction de filtrage : la taille de la maille du tissu est adaptée pour laisser passer des sédiments vers l'extérieur du sac mais pour retenir à l'intérieur du sac de petits objets récoltés. La taille de la maille définit un seuil de filtrage relatif à la taille des éléments filtrés.

L'outil de déblayage 9 comprend également un module de commande 92 destiné à contrôler le fonctionnement de la buse de propulsion 90 et du tube d'aspiration 91.

Dans l'exemple de réalisation particulier décrit ici, un câble métallique permet de relier mécaniquement le robot à un bateau en surface. L'une des extrémités du câble est par exemple accrochée à la barre 72 et l'autre extrémité est arrimée à un élément situé sur le bateau, par exemple un moulinet permettant d'enrouler et de dérouler le câble.

Le robot 1 est relié au bateau par deux autres câbles : un câble électrique d'alimentation en courant basse tension (25V maximum) et le câble de communication informatique. Les trois câbles (câble de liaison mécanique, câble électrique et câble de communication) peuvent être coaxiaux et former un seul câble référencé 26 sur la figure 1.

L'unité centrale 11 de commande du robot 1 comprend un microprocesseur auquel les éléments suivants sont connectés : module de communication 6, écran 10, module de commande 42 des moyens d'entraînement en déplacement 4, dispositif d'éclairage 7, module de commande 92 de l'outil de déblayage 9.

Le dispositif 2 de pilotage à distance du robot 1 est par exemple situé sur le bateau. Il comprend un module de communication 20, une paire de lunettes de vision 3D 21, un écran d'affichage 22, un module de visualisation 3D 23, un module 24 de guidage à distance du robot et une unité centrale de commande 25, en l'espèce un processeur.

Le module de communication 20 est destiné à communiquer avec le robot 1, ici par liaison filaire, par le câble de communication informatique. Il permet de recevoir des données transmises par le robot 1, notamment des images capturées par les caméras 5A, 5B. Il permet également de transmettre au robot 1 des commandes de guidage pour guider le robot 1 lors de ses déplacements.

Les lunettes de vision 3D sont adaptées pour qu'un utilisateur portant les lunettes visualise sur l'écran 22 l'environnement sous-marin du robot en trois dimensions à partir des images capturées par le robot 1 et transmises au dispositif de pilotage 2. Le module de visualisation 3D 23 est destiné à générer des images en trois dimensions et de créer un environnement sous-marin virtuel en trois dimensions représentatif de l'environnement sous-marin réel du robot 1, à partir des images capturées et transmises par le robot 1. Cet environnement 3D virtuel créé est affiché sur l'écran 22.

En outre, les lunettes 3D sont équipées d'un module de détection de mouvements de la tête de l'utilisateur portant les lunettes et d'un module de guidage du robot à partir des mouvements de tête détectés.

Le module de guidage 24 comprend ici une manette de commande, connectée à l'unité centrale 25, et un driver ou pilote de gestion de la manette destiné à traduire les mouvements de la manette en commandes de guidage destinées au robot 1.

Les commandes de guidage du robot, qui peuvent être générées par le module de guidage 24 et/ou par les lunettes 3D, sont destinées à guider les déplacements du robot dans son environnement sous-marin réel. Elles sont générées à partir de l'environnement virtuel en trois dimensions créé. Par exemple, les mouvements de la tête de l'utilisateur portant les lunettes 3D permettent d'orienter le robot, tandis qu'une manette actionnée par l'utilisateur permet de faire avancer, reculer, monter ou descendre le robot 1. Les commandes de guidage peuvent notamment commander l'orientation les pales rotatives des moteurs 40A-40D.

On pourrait envisager d'intégrer un écran d'affichage dans les lunettes de vision 3D (à la place ou en complément de l'écran 22 du dispositif de pilotage 2). Dans ce cas, les lunettes 3D sont des lunettes de réalité virtuelle. Il s'agit par exemple de lunettes de type « Oculus Rift ». En outre, les lunettes pourraient être intégrées dans un masque de plongée et être portées par un plongeur afin de permettre à ce dernier de guider les déplacements du robot 1 *in situ* (c'est-à-dire dans l'eau, sur le site d'exploration sous-marine).

On va maintenant décrire le fonctionnement de l'équipement d'assistance à une exploration sous-marine.

En fonctionnement, lors d'une exploration sous-marine, le robot 1 est plongé dans l'eau et se déplace jusqu'à une zone d'exploration, par exemple une épave située au fond de la mer. Il est relié au bateau par le câble 25.

Le robot 1 prend des images de son environnement à l'aide des caméras 5A, 5B. Les images sont transmises au dispositif de pilotage 2 situé sur le bateau.

Le dispositif de pilotage 2 génère des images 3D et crée un environnement sous-marin virtuel en trois dimensions, représentatif de l'environnement réel du robot 1, à partir des images capturées et transmises par le robot 1.

Le robot 1 est guidé dans ses déplacements par un opérateur situé auprès du poste de pilotage 2. L'opérateur porte les lunettes 21 de vision 3D et de guidage. Il visualise sur l'écran 22, en trois dimensions, l'environnement sous-marin du robot créé à partir des images capturées par le robot.

A l'aide de la manette de commande et/ou de mouvements de la tête, l'opérateur guide le robot 1 dans ses déplacements. Des commandes de guidage sont transmises par le poste de pilotage 2 au robot 1 qui les exécute. Ces commandes de guidage sont destinées à guider le robot 1 dans son environnement réel à partir d'un guidage dans l'environnement sous-marin virtuel en trois dimensions créé et visualisé sur l'écran 22.

Durant l'exploration, le robot 1 est positionné à proximité d'une zone à déblayer. Sur commande de l'opérateur, par l'intermédiaire du poste de guidage, le robot 1 propulse un jet d'eau sous pression sur la zone à déblayer à l'aide de la buse 90 et, concomitamment, aspire au moins partiellement les sédiments dégagés à l'aide du tube concentrique 91. Les sédiments ainsi aspirés sont rejetés plus loin par le tube d'évacuation.

Dans l'exemple de réalisation qui vient d'être décrit, le robot 1 est équipé d'un outil de déblayage comportant une buse 90 de propulsion d'un jet d'eau, un tube d'aspiration 91 et un tube d'évacuation. Le robot 1 pourrait être équipé en complément d'un autre outil d'exploration sous-marine (outil de nettoyage, outil de préhension ou de saisie par exemple pour saisir un objet, outil de prélèvement par exemple pour prélever des échantillons de matière à analyser, etc.).

Les outils du robot pourraient être interchangeables. Chaque outil pourrait être monté de façon amovible sur un même site de fixation, ou porte-outil, du robot.

A la place d'un guidage 3D, le robot pourrait utiliser un guidage 2D, notamment à partir d'images 2D capturées par le robot.

Dans la description qui précède d'un exemple particulier de réalisation de l'invention, le robot 1 est relié au bateau par un câble mécanique, un câble de communication de données et un câble d'alimentation électrique, destinés à assurer respectivement la liaison physique, la transmission de données de communication et l'alimentation électrique entre le bateau et/ou le dispositif de pilotage 2 et le robot 1. En variantes, on peut envisager de supprimer, ou tout au moins de ne pas utiliser, tout ou partie de ces câbles.

Selon une première variante de réalisation, le robot n'est pas relié physiquement au bateau par un câble mécanique. Dans ce cas, le robot 1 est autonome physiquement. On pourrait toutefois prévoir un câble de liaison physique avec un plongeur accompagnant le robot 1 lors de la plongée, afin de limiter le risque de perte du robot.

Selon une deuxième variante de réalisation, le robot n'est pas relié à une source d'alimentation électrique située sur le bateau par un câble d'alimentation électrique. Dans ce cas, le robot intègre une batterie d'alimentation électrique. Cette batterie est avantageusement rechargeable, par exemple auprès d'une borne d'alimentation électrique. Cette borne de recharge peut être situé sur le bateau et/ou à terre.

Selon une troisième variante de réalisation, le robot n'est pas relié au dispositif de pilotage 2 par un câble de transmission de données. Dans ce cas, le robot intègre un module de communication sans fil adapté pour communiquer avec un module correspondant du dispositif de pilotage.

Selon une quatrième variante de réalisation, le robot ne communique pas avec le dispositif de pilotage 2 pendant la plongée. Dans ce cas, le robot n'est pas relié au dispositif de pilotage 2 par un câble de transmission de données et n'intègre pas de module de communication sans fil avec le dispositif de pilotage 2. Le robot peut intégrer des moyens mémoires de stockage de données, par exemple une mémoire interne permettant un transfert de données ultérieur et/ou une carte mémoire amovible de stockage de données. Le module de communication du robot est donc facultatif. Notons que, dans ce cas, le guidage du robot, notamment l'orientation les pales des moteurs d'entraînement, pourraient être commandés par une boucle d'asservissement exécutée par un module de pilotage autonome du robot.

Tout ou partie des différentes variantes de réalisation qui viennent d'être décrites peuvent être combinées.

D'une manière générale, le robot peut intégrer des moyens mémoires de stockage de données (par exemple mémoire interne permettant un transfert de données ultérieur ou une carte mémoire amovible de stockage de données).

Une fois hors de l'eau, le robot peut être rangé dans une station de réception. Celle-ci peut comprendre un logement adapté pour recevoir le robot. Un enrouleur, autour duquel le ou les câbles du robot sont destinés à être enroulés, peut également être prévu. La station de réception peut être montée sur une palette de transport. Le logement peut avantageusement être ménagé à l'intérieur de l'enrouleur. La station de réception peut également comporter un plateau mobile, par exemple un plateau coulissant, de support du robot. Le plateau peut être monté mobile entre une première position fermée ou de rangement, dans laquelle le robot est placé dans son logement, et une deuxième position ouverte ou de sortie, dans laquelle le robot peut être sorti de la station de réception.

Le robot de travail 1 peut être équipé d'un détecteur de métaux adapté pour la détection sous-marine. Par exemple, le détecteur de métaux peut être le détecteur E-TRAC^{©} fabriqué par la société MINELAB. Un tel détecteur présente les avantages suivants :
- il est capable de travailler en multifréquences de 1,5 kHz à 100 kHz, ce qui procure une grande précision d'analyse ;
- il peut télécharger des programmes de détection depuis un ordinateur, via une prise USB ;
- il permet une interprétation graphique d'une cible détectée sur un écran ;
- il permet de déterminer la nature d'une cible détectée.

Le détecteur de métaux comprend un anneau de détection. Celui-ci est avantageusement disposé autour de la buse 90 de propulsion d'un jet d'eau, de façon concentrique. La buse 90 est ainsi disposée au centre de l'anneau de détection.

Le module de visualisation 23 du dispositif de pilotage 2 peut dans ce cas être agencé pour incorporer dans la représentation virtuelle en 3D de l'environnement sous-marin, généré à partir des images capturées par le robot 1, des indications permettant d'identifier et/ou de repérer des zones dans lesquelles des éléments métalliques ont été détectés. Le fait de connaître l'emplacement d'éléments métalliques détectés permet aux archéologues d'en déduire des informations utiles relatives à un site de fouille archéologique telles que l'orientation et/ou la position d'un navire.

Le robot de travail 1 peut être adapté pour actionner de façon autonome la buse 90 de propulsion d'un jet d'eau, sur détection d'un élément métallique, afin de dégager celui-ci. A cet effet, le module 92 de commande de la buse 90 de propulsion d'un jet d'eau sous pression est destiné à commander de façon automatique ou sur commande décidée par un pilote une action de propulsion d'un jet d'eau sous pression sur détection d'un élément métallique de manière à dégager ledit élément métallique détecté. Grâce à cela, le robot dégage uniquement les sédiments recouvrant un élément métallique détecté, de façon autonome, notamment sans l'intervention d'un plongeur et sans pilote.

Le robot de travail 1 peut en outre être équipé d'un appareil de voltampérométrie destiné à analyser par voltampérométrie les éléments aspirés, notamment les sédiments, après détection d'un métal par le détecteur de métal. Cet appareil est avantageusement intégré à l'intérieur du robot 1. Le robot 1 étant pourvu d'un système d'aspiration de sédiments et ce flux passant à l'intérieur du robot, l' appareil de voltampérométrie est installé dans un coude de passage des sédiments. Il réalise une mesure de type « électrochimique » basée sur une variation du potentiel électrique de la solution contrôlée qui est un échantillon prélevé à l'intérieur du drone dans le passage de l'eau chargée de sédiments. L'analyse par voltampérométrie de l'échantillon (sédiments, eau, etc.) permet de confirmer si une pièce détectée est en métal ou bien si elle est en une autre matière (par exemple en faïence), par une mesure des concentrations ioniques contenues dans l'échantillon analysé. L'appareil d'analyse par voltampérométrie est par exemple l'appareil référencé 910 PSTAT mini fabriqué par la société Metrohm. Il a la capacité de mesurer les concentrations ioniques contenues dans les sédiments ou autres éléments aspirés. Il permet notamment de détecter la présence de métaux tels que le cuivre, le plomb, le platine, le zinc, le fer, le mercure, etc.. L'analyse par voltampérométrie des éléments aspirés par le tube d'aspiration 91 du robot de travail 1 permet d'obtenir une information additionnelle, en complément de l'information de détection de métal fournie par le détecteur de métaux. Cette double information sur la nature du sol sous-marin permet de rentabiliser le temps de fouilles et d'actionner une opération de déblayage (par dégagement des sédiments) par le robot de travail 1 seulement aux endroits où le détecteur de métaux a détecté la présence de métal et où, parallèlement, l'appareil de voltampérométrie a également détecté la présente de traces de métal dans des sédiments ou autres éléments aspirés.

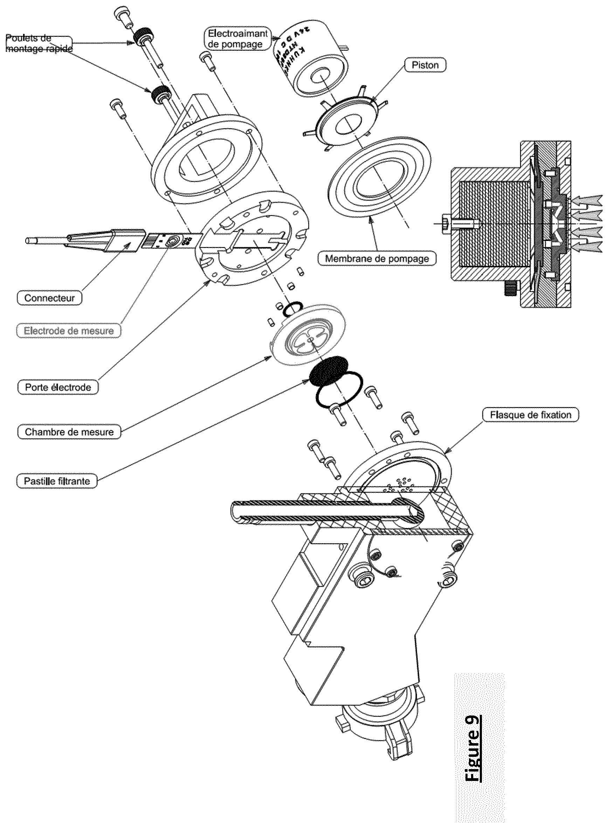

La figure 9 représente l'intégration d'une partie de l'appareil réf. 910 PSTAT mini dans un robot de travail 1. Une fiasque de fixation est solidaire du coude existant dans le robot à l'endroit où passe l'eau chargée de sédiments et une cellule de mesure voltampérométrique est montée de façon concentrique à cette fiasque et solidaire de celle-ci. Un électroaimant de pompage, un piston et une membrane de pompage se situent derrière un porte-électrodes et lorsque le piston est actionné par l'électroaimant, la membrane de pompage prélève la solution à analyser, ou l'échantillon, dans le passage d'eau chargée de sédiments. La solution-échantillon passe au travers d'une pastille filtrante avant d'être en contact avec une électrode de mesure logée dans le porte-électrode et un connecteur est fiché sur l'électrode de mesure qui garantit la connexion à l'appareil réf. 910 PSTAT mini situé à l'intérieur du robot.

L'électroaimant de pompage garde le piston dans sa position « armé », c'est à dire dans la position finale de sa course d'aspiration. Le piston reste dans cette position tant que l'électroaimant est sous tension. Lorsque l'électroaimant ne reçoit plus le courant, c'est un ressort de rappel de membrane qui libère sa force pour repousser le liquide analysé hors de la chambre de mesure dans le passage des sédiments. Le volume de liquide prélevé est plus de dix fois supérieur à la quantité de liquide analysé au contact de l'électrode de mesure. Il reste bien évidemment toujours un peu de liquide de la mesure précédente à chaque fois qu'une dose à analyser est prélevée à l'aide du piston commandé par l'électroaimant, mais ce volume « pollué » de la mesure précédente représente moins de 10 % du volume d'eau analysé de nouveau. Si on trouve donc des traces d'un polluant dans des échantillons non pollués, il sera au moins dix fois moins présent que dans la mesure précédente et comme le nombre de mesures est très élevé le volume pollué sera à chaque mesure divisé par dix. Donc, en cas de doute et pour garantir une certaine fiabilité, une méthode de mesure consiste par exemple à mesurer trois fois les sédiments provenant d'un même endroit de la fouille et tenir plus compte des deux dernières mesures que de la première.

Un robot de travail pourrait être également équipé d'un détecteur de radioactivité

Plusieurs robots de travail, analogues au robot 1 précédemment décrit, peuvent coopérer ensemble sur une même zone de fouille d'un site archéologique. Par exemple, deux robots de travail peuvent travailler en vis-à-vis et diriger leurs jets d'eau sous pression respectifs vers le même endroit.

Plusieurs robots de travail (analogues au robot 1 précédemment décrit) formant un groupe de travail ou de fouille peuvent être reliés à un robot central (ou station de base). Ce robot central est avantageusement posé et en appui sur le sol sous-marin, ce qui lui confère une bonne stabilité.

Le robot central peut intégrer une pompe centrale commune à laquelle les robots de travail sont reliés par leurs tubes d'évacuation respectifs faisant fonction de tubes de raccordement. En fonctionnement, chaque robot de travail peut projeter un jet d'eau sous pression sur une zone de travail ou de fouille couverte par ce robot et aspirer des sédiments sous l'action d'aspiration de la pompe centrale commune. Les sédiments aspirés par les différents robots de travail sont ensuite transportés jusqu'au robot central par l'intermédiaire des tubes de raccordement respectifs. Au niveau du robot central, les sédiments aspirés reçus en provenance des différents robots de travail sont répartis dans différents sacs de récolte respectifs (respectivement affectés aux différents robots de travail). Ainsi, les sédiments aspirés par un robot de travail donné sont récupérés dans le sac de récolte associé à ce robot. Ainsi, même si plusieurs robots travaillent sur un site et sont tous reliés au drone central qui contient la pompe d'aspiration de sédiments allant jusqu'à la buse de chaque drone de travail, un seul sac de sédiments est rempli par robot.

Les sacs de récolte sont de préférence perméables à l'eau. Ils sont avantageusement réalisés en un textile tissé présentant une largeur de maille adaptée pour laisser passer les sédiments mais pour retenir à l'intérieur du sac des éléments aspirés de plus grande taille. Les sacs de récolte peuvent avoir une capacité de récolte comprise par exemple entre 150 kg et 250 kg. Il peuvent être laissés provisoirement sur le site archéologique ou être remontés en surface par exemple au moyen de ballons de remontée ou d'un câble de traction.

Chaque sac de récolte peut être doté d'un élément d'identification. Par exemple, il peut porter un code barre, un code QR (code barre à deux dimensions) ou tout autre identifiant. Cet élément d'identification est associé à la zone de travail ou de fouille couverte par le robot associé à ce sac. Cela permet d'identifier l'endroit où un élément aspiré (par exemple une mosaïque ou un fragment d'objet) a été prélevé.

Chaque sac de récolte est raccordé au robot central par un tube de liaison solidaire à l'une de ses extrémités du robot central et destiné à être raccordé à son autre extrémité à une ouverture d'entrée du sac de récolte par l'intermédiaire d'un dispositif de raccordement. Ce dispositif de raccordement permet avantageusement de raccorder le tube de liaison au sac de façon étanche et avec un positionnement semi-automatique. L'opération de raccordement entre le tube de liaison et le sac de récolte peut ainsi être réalisée par un robot de travail, sans nécessiter une grande précision de mouvement. Par exemple, le dispositif de raccordement utilise des éléments magnétiques permettant d'étanchéifier le raccordement et facilitant le positionnement relatif et le raccord de l'extrémité de raccordement du tube et de l'ouverture du sac. Le dispositif de raccordement est avantageusement adapté pour désolidariser le sac et le tube de raccordement de façon automatique (c'est-à-dire sans l'intervention d'un opérateur ou d'un plongeur) lorsque le sac est remonté à la surface (par un câble de traction ou par un ballon).

Le robot central peut être équipé d'un dispositif d'éclairage analogue à celui d'un robot de travail 1, tel que précédemment décrit. Ce dispositif d'éclairage peut être orienté de façon réglable soit « manuellement » par un plongeur ou par un robot de travail, soit de façon automatisée au moyen d'un moteur qui peut être commandé à distance par un opérateur situé en surface.

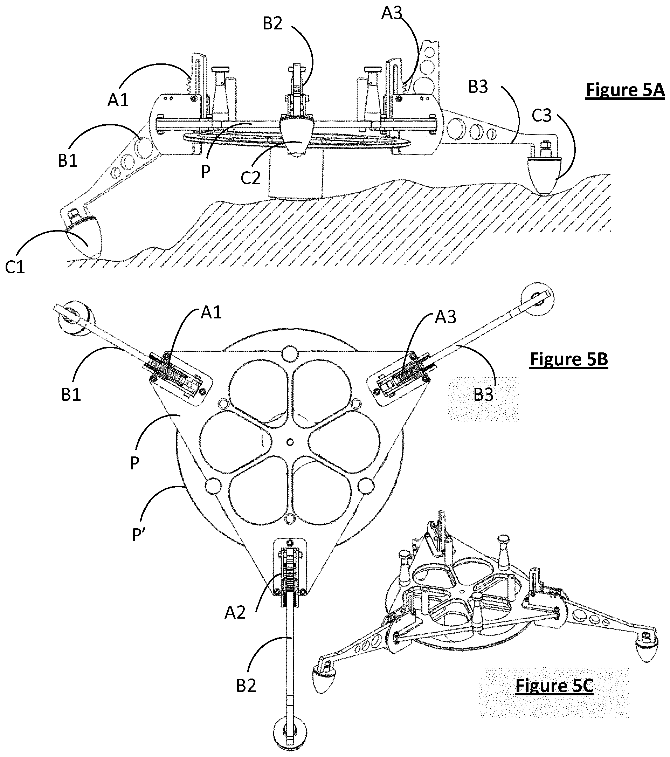

Le robot central est avantageusement équipé d'un système de positionnement, comportant trois bras de positionnement B1, B2, B3, également appelé « tripode », permettant au robot central d'atterrir sur un sol marin accidenté ou fortement en pente, comme représenté sur les figures 5A à 5D. Ce système de positionnement est autonome et ne fonctionne que grâce à la gravité et aux contacts avec le sol. Les trois bras B1 à B3 sont montés pivotants sur un plateau P par l'intermédiaire de systèmes respectifs d'encliquetage ou de crémaillères A1, A2, A3, comme représenté sur les figures 5A à 5C. Le plateau P est destiné à être positionné horizontalement lorsque le robot central est en position d'appui stable sur un sol marin. Initialement, au moment de la plongée, le robot a ses trois bras en position verticale haute, c'est-à-dire qu'ils sont tous les trois dans une position d'attente verticale et prêts à tomber en direction du sol lorsque le « ventre » du robot sera en contact avec le fond marin. C'est sous l'action du poids, lorsque le robot s'est posé sur le sol, que le plateau P libère les 3 bras B1 à B3 de façon à ce que ceux-ci chutent en pivotant autour de leurs axes jusqu'à ce que les extrémités des bras, munies ici d'éléments tampons d'appui C1, C2, C3, par exemple en caoutchouc, rentrent en contact individuellement avec le sol. Les systèmes d'encliquetage autour des axes A1-A3 verrouillent les bras B1-B3 dans leur position de contact avec le sol, rigidifiant ainsi l'ensemble des bras B1-B3 et du plateau P dans une position horizontale et parallèle au plan d'eau. Lorsque l'on remonte le robot, le poids libère le plateau P et les bras B1 à B3 sont déverrouillés. Sous l'action de la gravité et du déséquilibre par rapport à leur axe de rotation ou de pivotement, les bras B1 à B3 se repositionnent en position verticale. On soulignera que ce système fonctionne de façon autonome, c'est-à-dire sans moteur et sans électronique, sans électricité et sans ressorts, afin d'éviter d'éventuelles pannes et surtout de diminuer les contacts électriques à l'extérieur du robot.

Le robot central peut être équipé d'un dispositif de capture d'images, par exemple une caméra, disposée sous le robot et destinée à prendre des images au-dessous du robot pour contrôler la présence éventuelle d'objets fragiles au sol à l'endroit où le robot atterrit, avant de poser le robot, et éviter ainsi leur détérioration par le robot.

La figure 5A représente le système de positionnement du robot central posé sur un terrain irrégulier et l'adaptation du système des bras de positionnement au terrain tout en gardant la plateforme de base ou plateau P le plus horizontal possible, c'est-à-dire le plus parallèle possible au plan d'eau. Cela permet de garantir une bonne stabilité du robot principal, son bon fonctionnement et le bon positionnement des différents branchements s'effectuant sur ce robot principal.

Les figures 5B et 5C représentent le système de positionnement du robot central en vue de dessus et en perspective.

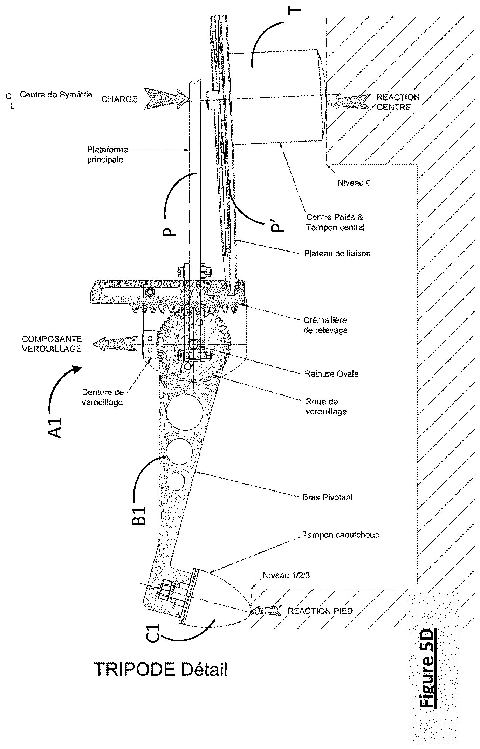

Sur la figure 5D, on a représenté des détails de l'articulation de l'un des bras B1-B3 du tripode ou système de positionnement. Bien entendu, les trois bras B1 à B3 sont analogues.

Le plateau P ou « plateforme principale » a comme objectif de rester le plus parallèle possible au plan d'eau, c'est-à-dire à l'horizontale. Au-dessous, le système comporte un plateau de liaison P' sur lequel est fixé, en son centre, un élément T de contre-poids et de tampon central. Lorsque le robot principal équipé de son tripode est dans sa phase de descente dans l'eau, les trois bras pivotants B1 à B3 sont en position relevée et le plateau de liaison est au plus bas de sa course, parallèle à la plateforme principale P. Le plateau de liaison P' entraîne les crémaillères de relevage qui sont, au moment de la descente, dans leur position la plus basse. Lorsque le robot arrive au contact avec le sol, le robot est ralenti et un pilote observe, via la caméra qui scrute le sol, le point de contact pour ne pas poser le robot principal sur d'éventuels artefacts ou objets fragiles. Lorsque l'endroit d'atterrissage est validé, on continue la descente de l'ensemble, puis c'est l'élément T de contrepoids et de tampon central qui entre en contact en premier avec le sol. Celui-ci transmet immédiatement un mouvement vertical via son plateau de liaison P' aux trois crémaillères A1-A3, alors que la plateforme principale, sur laquelle est posée toute la charge du drone principal, continue à descendre, abaissant en même temps les trois axes de rotation des bras pivotant dans une rainure ovale. Plus la différence de distance entre la plateforme principale P et le plateau de liaison P' diminue, plus l'extrémité des trois bras s'approche du sol, le pivotement des bras B1 à B3 s'effectue jusqu'à ce que les extrémités respectives des bras C1 à C3, comprenant les tampons en caoutchouc, s'enfoncent légèrement dans le sol. A ce moment-là, la plateforme principale ou plateau P continue à descendre et positionne le pivotement du bras en haut de la rainure ovale, ce qui a pour conséquence de positionner une roue à cliquet (roue de verrouillage) dans un plot denture de verrouillage. Ainsi, les trois bras B1 à B3 ont terminé leur course à la recherche d'une réaction de contact au sol, afin de poser au sol le tripode ou système de positionnement. On obtient une plateforme principale P qui reste horizontale et un plateau de liaison P' qui s'incline en fonction du terrain. Lorsque plus rien ne bouge, la charge de l'ensemble pousse la plateforme principale contre le bas et provoque ainsi le positionnement des trois roues de verrouillage dans les plots de denture de verrouillage.

C'est seulement lorsqu'un câble de traction tire le drone pour l'amener en surface que les points de pivotement des trois bras retombent dans le bas de la rainure ovale et, sous l'action de la gravité, le contrepoids, par l'intermédiaire du plateau de liaison P', tire les crémaillères contre le bas et entraîne, via leurs dentures, les trois bras qui se repositionnent à la verticale en « position relevée ».

En fonction du terrain (niveau et dureté), on peut effectuer plusieurs essais d'atterrissage sur un même site jusqu'à que l'on soit dans une position idéale pour travailler. Il est aussi intéressant de pouvoir se déplacer sur quelques dizaines de mètres en ayant chaque fois une orientation des bras différente car il ne s'agit pas forcément de traiter l'atterrissage du robot principal sur une simple pente, mais de prévoir que cette pente peut aussi comporter des cratères.

Ce système de positionnement « tripode » est donc auto-adapté au profil du terrain sans avoir besoin d'être remonté en surface et sans avoir besoin de l'intervention d'un plongeur.

Un but étant de diminuer les risques liés à la plongée en haute profondeur et d'optimaliser le travail d'ébauche des plongeurs-archéologues, il est donc absolument très avantageux que le pilote du robot puisse agir sans jamais être assisté par des plongeurs.

Le robot central (ou la station de base) ayant une position fixe, il peut servir de repère (ou de référence) géographique pour les robots de travail. A cet effet, le robot central peut être doté d'une source optique d'émission de lumière constituant un point de repère optique pour les robots de travail. Chaque robot de travail possède un repère géographique interne de localisation défini par un point de référence constituant l'origine du repère et trois axes de préférence orthonormés. En fonctionnement, lorsqu'un robot de travail souhaite régler et/ou vérifier l'origine de son repère géographique de localisation, il s'approche de la source optique du robot central, la détecte et cale l'origine de son repère de localisation sur la source optique détectée. L'utilisation d'une telle technique optique de localisation permet de ne pas perturber la faune marine environnante.

Chaque robot de travail 1 peut également intégrer un système de débouchage destiné à déboucher l'un au moins des deux tubes (tube d'aspiration ou tube d'évacuation) en cas d'obstruction de celui-ci par un bouchon formé d'éléments aspirés (par exemple des agglomérats d'algues, des petits cailloux, etc.). Le système de débouchage comprend au moins un réservoir d'air comprimé destiné à envoyer de l'air comprimé dans les tubes (aspiration et évacuation). L'air sous pression est envoyée vers l'aspiration des sédiments, c'est-à-dire vers l'endroit où le robot de travail aspire les sédiments, et en direction du robot central contenant la pompe commune à tous les autres robots de travail. Deux réservoirs peuvent être prévus pour des raisons d'encombrement. L'air comprimé sous pression s'engageant dans un tube est destiné à déboucher le tube, autrement dit à évacuer un bouchon s'étant formé dans le tube et obstruant celui-ci. La pression de l'air comprimé libéré dans le tube doit être supérieure à la pression exercée par le liquide chargé de sédiments (et éventuellement d'autres éléments) sur le bouchon lorsque le tube est bouché. Le système de débouchage peut être actionné par un plongeur situé à proximité du robot ou par un opérateur, situé à distance (en surface), une commande d'actionnement étant dans ce cas transmise par le dispositif de pilotage au robot par voie de communication 25.

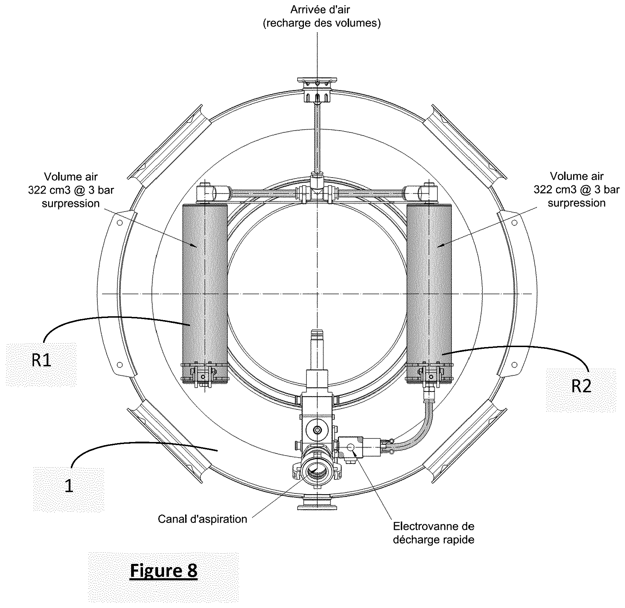

Sur la figure 8, on peut voir un exemple de réalisation de l'implantation d'une réserve d'air comprimé d'un robot 1, servant à déboucher les tubes ou conduits d'évacuation et d'aspiration simultanément, comportant ici deux réservoirs R1 et R2. Ces deux réservoirs d'air agissent « en série » et se remplissent en parallèle. En haut de la figure 8 (« à midi »), on peut voir le conduit d'arrivée d'air. Celui-ci est indirectement lié à la surface de l'eau. C'est avec la pression de l'air qui est envoyé dans le robot que l'on alimente ces deux réservoirs d'air sous pression. Ces deux réservoirs d'air sont constamment rechargés puisqu'ils sont en ligne (en série) à l'arrivée d'air sous pression dans le robot. Le pilote du robot a la possibilité lorsque l'un des orifices d'évacuation ou d'aspiration des sédiments est bouché d'actionner une électrovanne de décharge rapide des deux réservoirs d'air comprimé qui se vident de leur air en même temps puisqu'ils sont reliés en série. L'air échappé du réservoir de droite sur la figure 8 suit les conduits et s'oriente de façon égale dans l'une ou l'autre des extrémités du conduit, c'est-à-dire en direction de l'entrée des sédiments côté aspiration concentrique à la buse d'injection et de l'autre côté direction de la pompe d'aspiration des sédiments. Le pilote du robot a la possibilité d'actionner autant qu'il le souhaite l'électrovanne de décharge rapide puisque les deux réservoirs d'air sont constamment remis à leur pression maximum.

L'air comprimé contenu dans le ou les réservoirs du robot 1 peut également être utilisé pour gonfler un ballon de remontée permettant de faire remonter un sac de récolte ou tout autre objet à la surface de l'eau. Cela évite aux plongeurs d'utiliser des bonbonnes d'air comprimé. Le gonflage d'un ballon peut être piloté par un plongeur situé à proximité du robot 1 ou par un opérateur distant, depuis le dispositif de pilotage 2.

Chaque robot reçoit, par l'intermédiaire d'un câble de transmission, un courant électrique (tension électrique), une fibre optique pour véhiculer des informations numériques et un gaz sous pression. Le gaz est injecté à l'intérieur du robot de façon à ce que la pression exercée en interne, à l'intérieur du robot, soit toujours légèrement supérieure à la pression environnante exercée par l'eau. Cela permet de ne pas avoir de déformation de la coque extérieure du robot. De plus, en cas de manque d'étanchéité du robot, le gaz sous pression à l'intérieur du robot s'évacuerait vers l'extérieur et serait détectable par l'apparition de bulles visibles à l'endroit du défaut d'étanchéité du robot. En outre, cette légère différence entre les pressions interne et externe du robot évite une pénétration de l'eau à l'intérieur du drone, ce qui endommagerait évidemment les composants électriques de celui-ci.

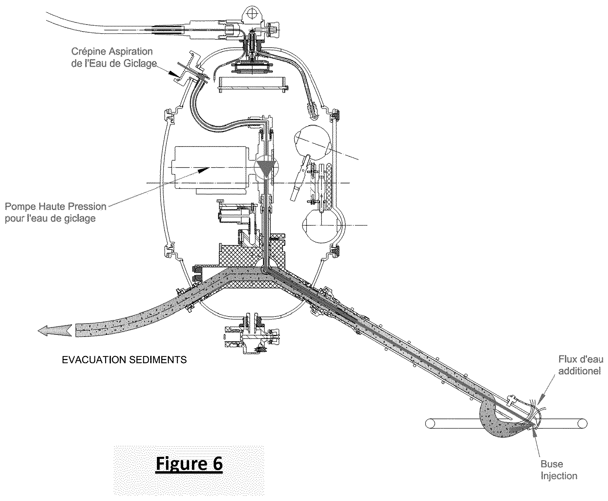

Sur la figure 6, on a représente un robot de travail en coupe perpendiculaire passant par le centre et sur le plan vertical. On peut voir à midi de ce dessin l'arrivée du câble en contact avec la surface et, en bas du croquis, la coupe de la buse d'injection. Le robot contient en son centre une pompe à haute pression utilisée pour le giclage de l'eau au moyen de la buse d'injection. La pompe une fois enclenchée, par exemple à la demande d'un pilote, aspire au travers d'une crépine d'aspiration l'eau environnante qui, sous l'effet de la haute pression de la pompe, est redirigée dans la buse d'injection. A l'extrémité de cette buse se trouve un plan de réflexion du jet d'eau contraignant ce dernier à emprunter un angle presque parallèle aux artefacts ou objets à dégager. Lorsque la buse d'injection commence son travail de dégagement de sédiments, ceux-ci sont aspirés par le canal d'évacuation des sédiments qui prend sa puissance d'aspiration sur le robot central dans lequel est disposée la pompe d'aspiration commune à tous les robots de travail. Le canal d'évacuation des sédiments est disposé de manière concentrique à la buse d'injection. Ainsi, si le jet d'eau à haute pression de la buse d'injection est simplement dirigé dans la zone de sédiments d'un éventuel artefact enfoui, les projections de sédiments dans l'eau provoqueraient une sorte de brouillard dégradant la visibilité. Les sédiments dégagés du sol sont immédiatement aspirés et, de cette façon, une visibilité suffisante pour travailler est garantie. Le robot est équipé de deux paires de moteurs pour ses déplacements. Lorsque le robot travaille proche du sol lors du dégagement des sédiments, il est possible de ne plus utiliser la paire de moteurs de façon à ne pas créer ce « brouillard » qui rend la visibilité nulle.

Notons que le fait de faire passer les sédiments à l'intérieur du robot permet d'analyser en temps réel la « pollution de l'eau ».

La conception de l'ensemble est ainsi simplifiée car tous les appareils de détection sont logés à l'intérieur du robot, ce qui permet des connexions immédiates entre les différentes technologies utilisées.

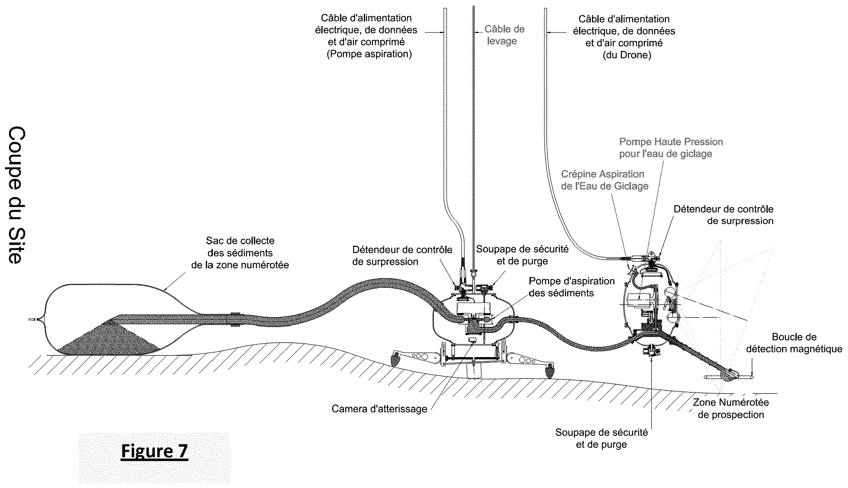

Sur la figure 7, on a représenté un schéma qui permet de visualiser le chemin des différents flux. On comprend par exemple que le robot central ou principal, posé sur les trois bras B1-B3, contient la pompe commune d'aspiration des sédiments. Celle-ci est pilotée depuis la surface par le câble d'alimentation qui contient l'alimentation électrique ainsi qu'une fibre optique pour les données et de l'air comprimé. Lorsque cette pompe d'aspiration des sédiments est activée, elle aspire des sédiments au travers de la pompe principale d'aspiration et les évacue dans un sac de collecte.

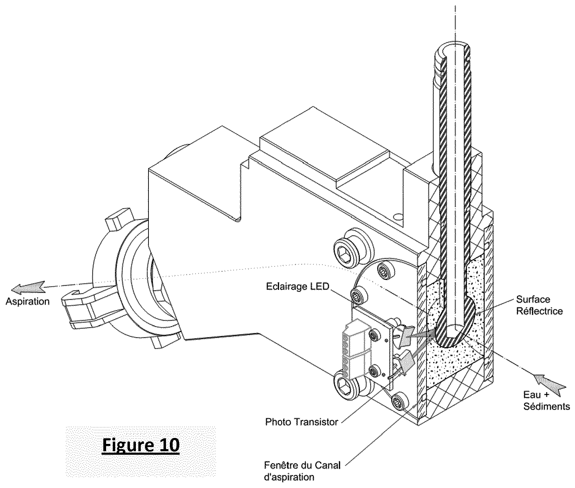

Il est important que, lors des fouilles, le système d'aspiration des sédiments absorbe véritablement les sédiments car le système de pompage ne fera pas la différence entre de l'eau propre et de l'eau chargée de sédiments. A cet effet, le robot de travail peut être équipé d'un appareil de mesure de turbidité, c'est-à-dire la proportion de sédiments contenus dans l'eau passant dans le drone en direction du drone principal servant de pompe des sédiments, installé dans le passage traversé par l'eau chargée de sédiments. Un exemple de réalisation de cet appareil est représenté sur la figure 10. Cette mesure consiste en un éclairage par LED de l'eau et des sédiments passant devant cet éclairage. Face à cet éclairage, une surface réflectrice renvoie la lumière dans un « photo transistor » qui analyse la quantité de lumière résiduelle. Lorsque l'intensité lumineuse mesurée dans le photo transistor est fortement réduite par rapport à l'éclairage LED, on détermine qu'il y a de sédiments dans l'eau. A l'inverse, si aucune différence de lumière n'est constatée entre la lumière émise par la LED et la lumière détectée par le photo transistor, on détermine qu'il n'y a que de l'eau (sans sédiments) dans le passage analysé. Cette mesure est complémentaire et renseigne aussi sur la nature et la composition du sol travaillé car si le pilote du robot voit en 3D le travail qu'il réalise, la seule façon qu'il a d'être certain qu'il aspire, qu'il dégage des sédiments est de constater qu'il creuse un trou dans le sol à l'endroit où il travaille. La mesure de turbidité aide aussi le pilote à doser la puissance du jet de propulsion d'eau destiné à dégager les objets enfouis sous les sédiments.

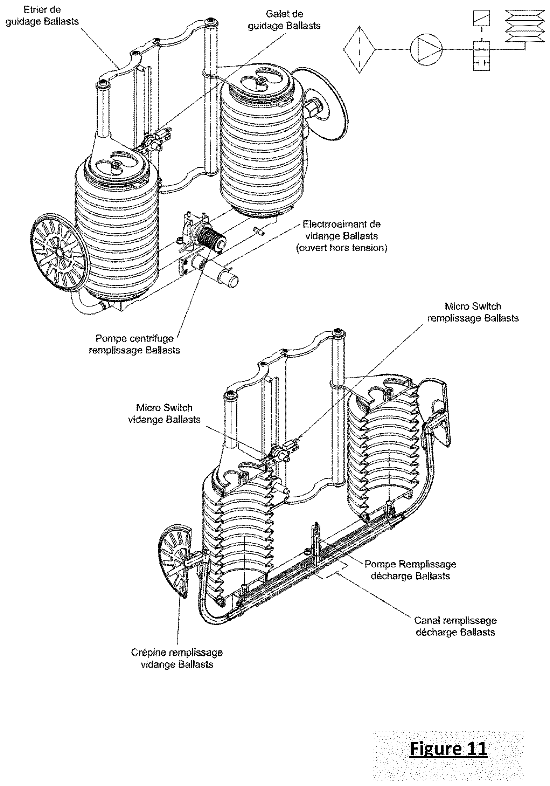

Le robot de travail 1 peut être équipé d'un ou plusieurs ballasts, par exemple une paire de ballasts telle que représentée sur la figure 11. Cette paire de ballasts est logée à l'intérieur du robot. Ils sont réalisés en caoutchouc souple et ont la forme d'un accordéon cylindrique ou d'un soufflet. Le principe de base est le suivant : lorsque les ballasts sont remplis d'eau, le poids du robot augmente, alors qu'en plus le volume d'air à l'intérieur du robot diminue. Ces deux facteurs poussent le robot à descendre au fond de l'eau. Au contraire, lorsque les ballasts se vident de l'eau qu'ils contiennent, leur volume diminue fortement. Cela a pour effet d'alléger le robot et d'augmenter le volume d'air dans le drone, ce qui permet à celui-ci de remonter à la surface de l'eau. Ce système de ballasts est principalement utilisé pour stabiliser le robot à une certaine profondeur, c'est-à-dire pour lui permettre de trouver l'équilibre, afin que le robot reste à sa profondeur sans avoir besoin des moteurs de propulsion. Une pompe de remplissage et décharge des ballasts est logée à l'intérieur du robot. Lorsque celle-ci aspire de l'eau environnante par l'intermédiaire d'un canal de remplissage, l'eau est aspirée au travers de deux crépines latérales de remplissage. Lors de ce pompage de l'eau, les ballasts se remplissent d'eau tant que la pompe aspire de l'eau. Un interrupteur de remplissage des ballasts est positionné sur le haut des deux soufflets de façon à ce que lorsque les soufflets atteignent leur limite de remplissage, l'interrupteur rentre en contact avec une butée et donne le signal d'arrêt de pompage. Bien entendu, on peut arrêter la pompe avant que les soufflets ne soient en butée, de façon à remplir plus ou moins les ballasts. Dans ce cas précis, le robot a tendance à descendre puisque l'on augmente son poids. Pour faire remonter le robot, on l'allège en coupant le courant d'alimentation de la pompe. Un électroaimant de vidange des ballasts s'ouvre lorsque le circuit est hors tension et, sous l'action de la pression de l'intérieur du robot, les soufflets se vident de leur eau en passant par le canal de décharge des ballasts. Empruntant ainsi le même chemin qu'à l'aller, l'eau ressort par les crépines de vidange des ballasts. Grâce à cela, en cas de coupure de courant involontaire, par exemple rupture de câble ou panne quelconque, le robot se vide de l'eau contenue dans les ballasts, s'allège donc de son contenu et remonte ainsi en surface, au lieu, dans le cas contraire, de plonger jusqu'à être arrêté par le sol.

Le robot de travail 1 peut être équipé de deux caméras standard 2D afin d'obtenir une vision stéréoscopique, c'est-à-dire une concaténation des deux films 2D, le résultat pouvant être appelé « film en 3D » ou « film stéréoscopique ». A cet effet, des moyens de pilotage des deux caméras 2D sont prévus pour obtenir la variation d'angle nécessaire à la correction du strabisme.

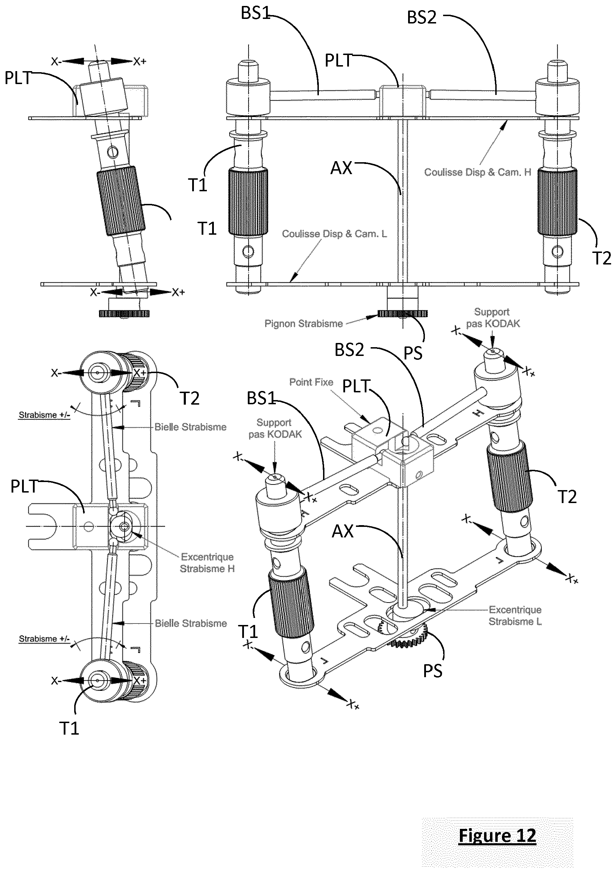

Sur la figure 12, on a représenté un système de support de deux caméras 2D. un plot PLT est solidaire de tout le bâti (châssis) de l'intérieur du robot. Un axe vertical AX est aussi solidaire du châssis, mais libre dans sa rotation de façon à ce que le « pignon strabisme » PS puisse être actionné dans un sens ou dans l'autre. Sur cet axe AX, deux excentriques de strabisme H et L sont montés symétriquement opposés sur cet axe. L'un H est placé dans le plot PLT et l'autre L en bas près du pignon de strabisme PS. Ces 2 excentriques H et L entraînent dans leur mouvement de rotation sur leurs flancs deux coulisses (basse et haute) chacun à l'intérieur d'une ouverture ovale appliquant un mouvement le long de l'axe X de façon à ce que lorsque l'on tourne le pignon de strabisme les cames inversées donnent un mouvement contraire aux deux coulisses lorsque l'une est positive sur l'axe X, l'autre est négative et inversement, ce qui a comme première conséquence l'inclinaison en avant ou en arrière de deux tiges de support de caméra T1 et T2. Lors de ce mouvement d'inclinaison, les axes de support de caméra T1, T2 doivent aussi tourner sur eux-mêmes et de façon opposée, ceci se réalise grâce à deux bielles BS1 et BS2 qui sont chacune solidaire d'un côté sur le support.

## Revendications

1. Robot sous-marin pour un équipement d'assistance à une exploration sous-marine comprenant
• des moyens de déplacement sous-marin,
• un dispositif (5) de capture d'images destiné à capturer des images adaptées pour créer un environnement sous-marin en trois dimensions à visualiser ;
• un dispositif de communication (6) destiné à transmettre à un dispositif de pilotage à distance lesdites images capturées et à recevoir des commandes de guidage en déplacement dans l'environnement sous-marin en trois dimensions créé ;
**caractérisé en ce qu'**il comprend
• une buse (90) de propulsion d'un jet d'eau sous pression destiné à dégager des dépôts, notamment de sédiments, d'une zone à nettoyer ; et
• un tube (91) d'aspiration d'au moins une partie des dépôts dégagés par le jet d'eau ;
• un tube d'évacuation de dépôts aspirés relié à un sac de récolte desdits dépôts aspirés, le sac étant relié au tube d'évacuation.

2. Robot selon la revendication précédente, **caractérisé en ce que** le tube d'aspiration (91) est disposé de façon concentrique autour de la buse propulsion (90).

3. Robot selon l'une des revendications précédentes, **caractérisé en ce que** le tube d'évacuation a une longueur d'au moins 5 m, notamment une longueur comprise entre 5 et 10m.

4. Robot selon l'une des revendications précédentes, **caractérisé en ce que** le tube d'évacuation est pourvu d'au moins un filtre adapté pour récupérer des fragments d'objet.

5. Robot selon l'une des revendications précédentes, **caractérisé en ce qu'**il est pourvu d'au moins une antenne réglable (70A, 70B) dotée d'un dispositif d'éclairage (71A, 71B).

6. Robot selon l'une des revendications précédentes, **caractérisé en ce qu'**il comprend un boîtier (3) présentant une face avant, une face arrière et un flanc annulaire (32).

7. Robot selon la revendication précédente, **caractérisé en ce que** le flanc porte une pluralité de moteurs (40A-40D), notamment quatre moteurs, d'entraînement en rotation de pales, notamment de pales orientables.

8. Robot selon la revendication précédente, **caractérisé en ce que** les quatre moteurs (40A-40D) sont disposés de façon symétrique et décalés angulairement l'un de l'autre de 90°.

9. Robot selon l'une des revendications précédentes, **caractérisé en ce qu'**il comporte un couvercle (34) étanche et amovible.

10. Robot selon l'une des revendications précédentes, **caractérisé en ce qu'**il est équipé d'un écran (10) destiné à afficher des images provenant du dispositif de pilotage et/ou des images capturées par le dispositif de capture d'images.

11. Robot selon la revendication précédente, **caractérisé en ce qu'**il est doté d'une glace montée de façon étanche sur l'une (30) des faces du boîtier (3) et derrière laquelle l'écran (10) est disposé.

12. Équipement d'assistance à une exploration sous-marine, comprenant un robot sous-marin (1) selon l'une des revendications précédentes et un dispositif (2) de pilotage à distance du robot, aptes à communiquer l'un avec l'autre, dans lequel
• le dispositif de pilotage (2) comprend des lunettes de vision 3D (21) adaptées pour qu'un utilisateur portant les lunettes (21) visualise l'environnement sous-marin du robot en trois dimensions à partir des images capturées par le robot (1) et des moyens (21, 24) de guidage en déplacement à distance du robot (1) à partir de l'environnement sous-marin en trois dimensions visualisé.

13. Équipement selon la revendication précédente, **caractérisé en ce que** les lunettes (21) sont adaptées pour guider le robot (1) par des mouvements de tête de l'utilisateur portant les lunettes (21).

14. Équipement selon la revendication précédente, **caractérisé en ce que** les lunettes (21) sont destinées à être portées par un utilisateur situé hors de l'eau ou **en ce que** les lunettes sont intégrées dans un masque de plongée et destinées à être portées par un utilisateur plongeur situé dans l'eau.

## Patentansprüche

1. Unterwasserroboter für eine Ausrüstung zur Unterstützung einer Unterwasserexploration, welcher umfasst:
• Mittel zur Bewegung unter Wasser;
• eine Vorrichtung (5) zur Bilderfassung, die dazu bestimmt ist, Bilder zu erfassen, die geeignet sind, eine zu visualisierende dreidimensionale Unterwasserumgebung zu erzeugen;
• eine Kommunikationsvorrichtung (6), die dazu bestimmt ist, die erfassten Bilder zu einer Fernsteuervorrichtung zu übertragen und Befehle zur Bewegungsführung in der erzeugten dreidimensionalen Unterwasserumgebung zu empfangen;
**dadurch gekennzeichnet, dass** er umfasst:
• eine Düse (90) zum Ausstoßen eines Druckwasserstrahls, der dazu bestimmt ist, Ablagerungen, insbesondere Sedimente, eines zu reinigenden Bereichs freizulegen; und
• ein Rohr (91) zum Ansaugen wenigstens eines Teils der durch den Wasserstrahl freigelegten Ablagerungen;
• ein Rohr zur Abführung von angesaugten Ablagerungen, das mit einem Sack zur Aufnahme der angesaugten Ablagerungen verbunden ist, wobei der Sack mit dem Abführrohr verbunden ist.

2. Roboter nach dem vorhergehenden Anspruch, **dadurch gekennzeichnet, dass** das Ansaugrohr (91) konzentrisch um die Ausstoßdüse (90) herum angeordnet ist.

3. Roboter nach einem der vorhergehenden Ansprüche, **dadurch gekennzeichnet, dass** das Abführrohr eine Länge von mindestens 5 m, insbesondere eine Länge zwischen 5 und 10 m aufweist.

4. Roboter nach einem der vorhergehenden Ansprüche, **dadurch gekennzeichnet, dass** das Abführrohr mit mindestens einem Filter versehen ist, das geeignet ist, Bruchstücke von Gegenständen aufzufangen.

5. Roboter nach einem der vorhergehenden Ansprüche, **dadurch gekennzeichnet, dass** er mit mindestens einer verstellbaren Antenne (70A, 70B) versehen ist, die mit einer Beleuchtungsvorrichtung (71A, 71B) ausgestattet ist.

6. Roboter nach einem der vorhergehenden Ansprüche, **dadurch gekennzeichnet, dass** er ein Gehäuse (3) umfasst, das eine Vorderseite, eine Rückseite und eine ringförmige Seitenwand (32) aufweist.

7. Roboter nach dem vorhergehenden Anspruch, **dadurch gekennzeichnet, dass** die Seitenwand mehrere Motoren (40A-40D), insbesondere vier Motoren, zum Drehantrieb von Schaufeln, insbesondere von ausrichtbaren Schaufeln, trägt.

8. Roboter nach dem vorhergehenden Anspruch, **dadurch gekennzeichnet, dass** die vier Motoren (40A-40D) symmetrisch angeordnet und um 90° zueinander winkelversetzt sind.

9. Roboter nach einem der vorhergehenden Ansprüche, **dadurch gekennzeichnet, dass** er eine dichte und abnehmbare Abdeckung (34) aufweist.

10. Roboter nach einem der vorhergehenden Ansprüche, **dadurch gekennzeichnet, dass** er mit einem Bildschirm (10) ausgestattet ist, der dazu bestimmt ist, von der Steuervorrichtung stammende Bilder und/oder Bilder, die von der Vorrichtung zur Bilderfassung erfasst wurden, anzuzeigen.

11. Roboter nach dem vorhergehenden Anspruch, **dadurch gekennzeichnet, dass** er mit einer Glasscheibe ausgestattet ist, die dicht an einer (30) der Seiten des Gehäuses (3) angebracht ist und hinter der der Bildschirm (10) angeordnet ist.

12. Ausrüstung zur Unterstützung einer Unterwasserexploration, welche einen Unterwasserroboter (1) nach einem der vorhergehenden Ansprüche und eine Vorrichtung (2) zur Fernsteuerung des Roboters umfasst, die in der Lage sind, miteinander zu kommunizieren, wobei
• die Steuervorrichtung (2) eine 3D-Brille (21), die dafür geeignet ist, dass ein Benutzer, der die Brille (21) trägt, die Unterwasserumgebung des Roboters anhand der von dem Roboter (1) erfassten Bilder dreidimensional sieht, und Mittel (21, 24) zur ferngesteuerten Bewegungsführung des Roboters (1) anhand der visualisierten dreidimensionalen Unterwasserumgebung umfasst.

13. Ausrüstung nach dem vorhergehenden Anspruch, **dadurch gekennzeichnet, dass** die Brille (21) geeignet ist, den Roboter (1) durch Kopfbewegungen des Benutzers, der die Brille (21) trägt, zu führen.

14. Ausrüstung nach dem vorhergehenden Anspruch, **dadurch gekennzeichnet, dass** die Brille (21) dazu bestimmt ist, von einem Benutzer getragen zu werden, der sich außerhalb des Wassers befindet, oder dadurch, dass die Brille in eine Tauchermaske integriert ist und dazu bestimmt ist, von einem Benutzer getragen zu werden, der sich als Taucher im Wasser befindet.

## Claims

1. An underwater robot for equipment assisting an underwater exploration, comprising
• means of underwater movement;
• an image capturing device (5) designed to capture images adapted to creating an underwater environment in three dimensions for visualization;
• a communication device (6) designed to transmit to a remote control device said captured images and to receive commands for guiding the movement in the created three-dimensional underwater environment;
**characterized in that** it comprises
• a jet propulsion nozzle (90) of pressurized water designed to clear away deposits, particularly sediments, from a zone being cleared; and
• an aspiration pipe (91) for at least some of the deposits released by the water jet;
• a pipe for evacuation of the aspirated deposits connected to a collection bag of said aspirated elements, the bag being connected to the pipe for evacuation.

2. The robot as claimed in the preceding claim, wherein the aspiration pipe (91) is disposed concentrically around the propulsion nozzle (90).

3. The robot as claimed in one of the preceding claims, wherein the evacuation pipe has a length of at least 5 m, especially a length between 5 and 10 m.

4. The robot as claimed in one of the preceding claims, wherein the evacuation pipe is provided with at least one filter designed to recover fragments of an object.

5. The robot as claimed in one of the preceding claims, wherein it is provided with at least one adjustable antenna (70A, 70B) having a lighting device (71A, 71B).

6. The robot as claimed in one of the preceding claims, wherein it comprises a housing (3) having a front face, a rear face and an annular sidewall (32).

7. The robot as claimed in the preceding claim, wherein the sidewall carries a plurality of motors (40A-40D), especially four motors, for driving the rotation of blades, especially orientable blades.

8. The robot as claimed in the preceding claim, wherein the four motors (40A-40D) are disposed symmetrically and set off from each other by an angle of 90°.

9. The robot as claimed in one of the preceding claims, wherein it comprises a removable water-tight cover (34).

10. The robot as claimed in one of the preceding claims, wherein it is outfitted with a screen (10) designed to display images coming from the control device and/or images captured by the image capturing device.

11. The robot as claimed in the preceding claim, wherein it is provided with a glass mounted tightly at one (30) of the faces of the housing (3), behind which the screen (10) is disposed.

12. Equipment for assisting underwater exploration, comprising an underwater robot (1) according to one of the preceding claims and a device (2) for remote control of the robot, able to communicate with each other, wherein
• the control device (2) comprises 3D glasses (21) designed so that a user wearing the glasses (21) views the underwater environment of the robot in three dimensions on the basis of images captured by the robot (1) and means (21, 24) of remote guidance of the movement of the robot (1) on the basis of the underwater environment visualized in three dimensions.

13. Equipment as claimed in the preceding claim, wherein the glasses (21) are designed to guide the robot (1) by head movements of the user wearing the glasses (21).

14. Equipment as claimed in the preceding claim, wherein the glasses (21) are designed to be worn by a user situated outside the water or wherein the glasses are integrated in a diving mask and are designed to be worn by a diver user situated in the water.
